(19) Europäisches Patentamt
European Patent Office
Office européen des brevets

(11) EP 3 875 544 A1

(12) EUROPÄISCHE PATENTANMELDUNG

(43) Veröffentlichungstag:
08.09.2021 Patentblatt 2021/36

(21) Anmeldenummer: 21159867.7

(22) Anmeldetag: 01.03.2021

(51) Int Cl.:
C09C 1/00 (2006.01)          A01N 25/26 (2006.01)
A01N 59/16 (2006.01)         C09C 1/30 (2006.01)
C09D 5/16 (2006.01)          A01N 59/20 (2006.01)
C08K 3/08 (2006.01)          C08K 3/22 (2006.01)
C08K 3/36 (2006.01)          C09D 7/61 (2018.01)

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 06.03.2020 EP 20161345

(71) Anmelder: Evonik Operations GmbH
45128 Essen (DE)

(72) Erfinder:
• Roland, Katrin
45257 Essen (DE)
• Foth, Julia
47495 Rheinberg (DE)
• Michael, Günther
63791 Karlstein (DE)
• Schleifnig, Dennis
59399 Olfen (DE)

(74) Vertreter: Evonik Patent Association
c/o Evonik Industries AG
IP Management
Bau 1042A/PB 15
Paul-Baumann-Straße 1
45772 Marl (DE)

(54) **LACKSYSTEM MIT ANTI-FOULING-EIGENSCHAFT**

(57) Lacksystem welches ein bewuchshemmendes Metalloxid und eine pyrogene Kieselsäure enthält, wobei die pyrogene Kieselsäure eine BET-Oberfläche von 150 bis 400 $m^2/g$, eine Stampfdichte von 100 bis 300 g/l und eine Verdickung von weniger als 500 mPas aufweist, bei dem das Gewichtsprozent der Kieselsäure ≤ dem Gewichtsprozent des Metalls und/oder dessen Oxids bezogen auf das Gesamtgewicht des Lacksystems ist umfassend mindestens einen wasserbindenden organischen und/oder anorganischen Füllstoff.

**Beschreibung**

Die Erfindung betrifft ein Lacksystem mit Anti-Fouling-Eigenschaft basierend auf mindestens einem bewuchshemmenden Metall und/oder dessen Oxid und einer pyrogenen Kieselsäure.

Bewuchshemmende Beschichtungen, die Metalloxide enthalten, sind bekannt. Das Hauptproblem bei der Verwendung von Metalloxiden ist deren exponentielle Freisetzung. Dies bedingt einen hohen notwendigen Anteil an Metalloxiden im Lack, wenn man von einer biologisch wirksamen Biozid-Konzentration über den Zeitraum der Lebensdauer der Beschichtung ausgeht.

In US7147921 wird vorgeschlagen die Problematik der Freisetzung durch eine Umhüllung von Kupfer mit einem Siliciumdioxidfilm zu lösen. Tatsächlich ist zu beobachten, dass trotz des Siliciumdioxidfilmes eine unerwünscht rasche Freisetzung des Kupfers erfolgt.

In WO2013/036746 werden Kern-Hülle-Partikel offenbart, deren Kern Kupfer enthält und deren Hülle aus einer porösen Schicht von Siliciumdioxid besteht. Die Hülle wird nasschemisch durch Einsatz einer Natriumsilikatlösung aufgebracht.

In WO2014/187769 werden Kern-Hülle-Partikel vorgeschlagen, deren Hülle im Wesentlichen aus partikulärem Siliciumdioxid mit einer Dicke von 0,1 bis 10 $\mu$m und deren Kerne aus einem bewuchshemmenden Metalloxid mit einem mittleren Partikeldurchmesser von 1 bis 20 $\mu$m bestehen. Die Bindung der Hülle zum Kern ist eine feste Bindung. Bei einer Dispergierung ist keine nennenswerte Trennung dieser Bindung zu beobachten. Die Kern-Hülle-Partikel können hergestellt werden, indem man ein Gemisch der Kern- und Hülle-bildenden Materialien mit einem spezifischen Energieeintrag von 200 bis 2000 kJ/kg in Kontakt bringt. Es wird ausgeführt, dass sich bei einem spezifischen Energieeintrag von weniger als 200 kJ/kg ein physikalisches Gemisch aus Siliciumdioxidpartikeln und Metalloxidpartikeln ausbildet. Es wird ausgeführt, dass dieses Gemisch zu keiner reduzierten Freisetzung des bewuchshemmenden Materiales führt.

Die EP 3 271 426 beschreibt eine Alternative zu den im Stand der Technik bekannten Kern-Hülle-Partikel enthaltenden Lacksystemen, jedoch weisen diese Lacksysteme zudem keine guten Lackeigenschaften, wie z. B. Härte, Sprödigkeit oder Lagerstabilität auf.

Wünschenswert ist es daher, ein verbessertes Lacksystem bereitzustellen, das eine gute Anti-Fouling Eigenschaft aufweist, jedoch ohne die aus dem Stand der Technik bekannten Nachteile der Lackeigenschaften.

Überraschenderweise wurde nun gefunden, dass, angelehnt an die Lehre der EP 3 271 426, sich die Einsatzmenge von pyrogenen Kieselsäuren verringern lässt, um trotzdem eine hervorragende Anti-Fouling-Eigenschaft zu erreichen. Zudem wurde insbesondere festgestellt, dass die mit dem erfindungsgemäßen Lacksystem hergestellten Beschichtungen eine bessere Lagerstabilität, eine geringere Sprödigkeit sowie eine höhere Härte aufweisen.

Gegenstand der Erfindung ist ein Lacksystem, welches mindestens ein bewuchshemmendes Metall und/oder dessen Oxid und eine pyrogene Kieselsäure mit einer BET-Oberfläche von 150 bis 400 m$^2$/g, bestimmt nach DIN ISO 99277, einer Stampfdichte von 100 bis 300 g/l, bestimmt nach DIN EN ISO 787/11 und einer Verdickung von weniger als 500 mPas bei 25°C, gemessen wie unten beschrieben, erhältlich nach Vermahlung mit einem spezifischen Energieeintrag von 200 bis 2000 kJ/kg, bevorzugt 500 bis 1800 kJ/kg, ganz besonders bevorzugt 700 bis 1500 kJ/kg, berechnet gemäß Spezifischem Energieeintrag = $(P_D - P_{D,0}) \times t$ / m, mit $P_D$ = gesamte eingetragene Leistung, $P_{D,0}$ = Leerlaufleistung, t = Zeit des Energieeintrages, m = Masse der eingesetzten Kieselsäure, enthält, wobei das Gewichtsprozent der Kieselsäure ≤ dem Gewichtsprozent des Metalls und/oder dessen Oxids bezogen auf das Gesamtgewicht des Lacksystems ist und das Lacksystem mindestens einen wasserbindenden organischen und/oder anorganischen Füllstoff aufweist.

Pyrogene Kieselsäuren werden durch Flammenhydrolyse von Siliciumverbindungen hergestellt. Bei diesem Verfahren wird eine hydrolysierbare Siliciumverbindung in einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Bei diesem Prozess werden in der Regel Aggregate gebildet, die ein dreidimensionales Netzwerk bilden. Mehrere Aggregate können Agglomerate bilden. Eine so hergestellte pyrogene Kieselsäure wird als pyrogene, hydrophile Kieselsäure bezeichnet. Direkt aus dem Flammprozess erhaltene Kieselsäuren mit einer BET-Oberfläche von 150 bis 400 m$^2$/g weisen eine geringe Stampfdichte und eine hohe Verdickung in Lacken auf. So ist in der Regel die Stampfdichte bei ca. 40 bis 60 g/l und die Verdickung bei mehr als 2500 mPas bei 25°C. Diese pyrogene Kieselsäure eignet sich nicht für die vorliegende Erfindung.

Die in der vorliegenden Erfindung vorliegende Kieselsäure weist eine hohe Stampfdichte bei niedriger Verdickung auf.

Vorzugsweise beträgt die BET-Oberfläche 180 bis 330 m$^2$/g, die Stampfdichte 150 bis 250 g/l und die Verdickung 250 bis 400 mPas bei 25°C.

Die Kieselsäure kann beispielsweise hergestellt werden, indem man die oben beschriebene direkt aus dem Flammprozess erhaltene Kieselsäure vermahlt.

Die im Lacksystem vorliegende pyrogene Kieselsäure kann auch eine hydrophobierte Kieselsäure sein. Sie kann hergestellt werden, indem man eine hydrophile Kieselsäure, wie sie aus dem Flammprozess erhalten wird, mit einem Hydrophobierungsmittel zur Reaktion bringt und nachfolgend vermahlt. Als Hydrophobierungsmittel kommen hauptsächlich Organosilane, Halogenorganosilane, Silazane oder Polysiloxane in Frage. Bevorzugt kommen Dimethyldichlorsilan, Octyltrimethoxysilan, Octyltriethoxysilan, Hexamethyldisilazan, Hexadecyltrimethoxysilan, Hexadecyltriethoxysilan und Dimethylpolysiloxan zum Einsatz. Je nach eingesetztem Hydrophobierungsmittel und dessen Menge verbleibt ein Kohlenstoffgehalt von 1 bis 10 Gew.-% auf der hydrophobierten Kieselsäure. Auch diese hydrophobierte Kieselsäure wird nachfolgend vermahlen.

In beiden Fällen, der hydrophilen und der hydrophoben Kieselsäure, ist zur Vermahlung ein spezifischer Energieeintrag von 200 bis 2000 kJ/kg, bevorzugt 500 bis 1800 kJ/kg, ganz besonders bevorzugt 700 bis 1500 kJ/kg, erforderlich. Der spezifische Energieeintrag berechnet sich nach: Spezifischer Energieeintrag = $(P_D - P_{D,0}) \times t / m$, mit $P_D$ = gesamte eingetragene Leistung, $P_{D,0}$ = Leerlaufleistung, t = Zeit des Energieeintrages, m = Masse der eingesetzten Kieselsäure.

Der Energieeintrag erfolgt am besten mit einem Aggregat mit einer Leistung von wenigstens 1 kW, bevorzugt 1 bis 20 kW, besonders bevorzugt 2 bis 10 kW. Besonders bevorzugt ist der Einsatz einer Rotorkugelmühle. Die Mahlkugeln sind bevorzugt aus Stahl. Bei Einsatz einer Rotorkugelmühle bezieht sich $P_D$ auf die gesamte, eingetragene Leistung, d.h. inklusive Kieselsäure und Mahlkugeln. $P_{D,0}$ beschreibt die Leerlaufleistung, d.h. ohne Kieselsäure und Mahlkugeln. Das Füllvolumen der pyrogenen Kieselsäure in der Rotorkugelmühle beträgt bevorzugt 10 bis 80 Vol.-%, bevorzugt 20 bis 50 Vol.-%, jeweils bezogen auf das Volumen der Rotorkugelmühle. Die Dauer des Vermahlens beträgt bevorzugt 0,1 bis 120 Minuten, besonders bevorzugt 0,2 bis 60 Minuten, ganz besonders bevorzugt 0,5 bis 10 Minuten. Bei der Vermahlung kann Wasser, bis zu 3 Gew.-%, bezogen auf die Kieselsäuremenge, zugesetzt werden.

Es hat sich gezeigt, dass sich durch diesen Behandlungsschritt die Aggregatstrukturen und Aggregatdimensionen verändern. Der maximale Aggregatdurchmesser einer solchen vermahlenen Kieselsäure liegt nur mehr bei in der Regel 100 bis 200 nm. Darüber hinaus ist der Verzweigungsgrad und die Anzahl der Primärpartikel pro Aggregat reduziert.

Die BET-Oberfläche wird bestimmt nach DIN ISO 99277 und die Stampfdichte nach DIN EN ISO 787/11.

Die Verdickung, in mPas, wird bestimmt in einer Dispersion des Siliciumdioxidpulvers in einem ungesättigten Polyesterharz, wie Cokondensate aus ortho- oder meta-Phthalsäure und Malein- oder Fumarsäure, oder deren Anhydride, und einem niedermolekularen Diol, wie zum Beispiel Ethylenglykol, 1,2- oder 1,3-Propandiol, 1,2-, oder 1,3- oder 1,4-Butandiol oder neo-Pentylglykol $((CH_3)_2C(CH_2OH)_2)$, oder Polyole, wie Pentaerythrit, bevorzugt gelöst zu 30 bis 80 Gew.%, bevorzugt 60 bis 70 Gew.%, in einem olefinischen Reaktivverdünner als Lösemittel, wie zum Beispiel Monostyrol. Die Viskosität des Polyesterharzes beträgt 1300 +/- 100 mPas bei einer Temperatur von 22°C. 7,5 g Siliciumdioxidpulver werden zu 142,5 g Polyesterharzes bei einer Temperatur von 22°C eingebracht und mittels eines Dissolvers bei 3000 $min^{-1}$ dispergiert. 60 g dieser Dispersion werden mit weiteren 90 g des ungesättigten Polyesterharzes versetzt und der Dispergiervorgang wird wiederholt. Als Verdickung wird der Viskositätswert in mPas der Dispersion bei 25°C, gemessen mit einem Rotationsviskosimeter bei einer Scherrate von 2,7 $_S^{-1}$, bezeichnet. Geeignet als ungesättigtes Polyesterharz ist beispielsweise Ludopal® P6, BASF.

Bevorzugt ist das Gewichtsprozent von Kieselsäure zu Metall und/oder dessen Oxid von 1 : 1 bis 1 : 10, bevorzugt 1 : 1 bis 1 : 8, besonders bevorzugt 1 : 1 bis 1 : 5 bezogen auf das Gesamtgewicht des Lacksystems ist

Erstaunlicherweise weist eine Beschichtung, hergestellt mit dem erfindungsgemäßen Lacksystem, eine bessere Anti-Fouling-Wirkung und verbesserte Lackeigenschaften, wie z.B. die Härte der Beschichtungsoberfläche oder die Sprödigkeit, auf, als eine Beschichtung gemäß der EP 3 271 426, obwohl im Verhältnis zum bewuchshemmenden Metall und/oder dessen Oxid weniger Kieselsäure eingesetzt wurde. Die verbesserten Effekte sind in den Beispielen, wie unten beschrieben, dargelegt.

Ohne an eine Theorie gebunden zu sein, könnten diese verbesserten Effekte durch das Verwenden von mindestens einem wasserbindenden organischen und/oder anorganischen Füllstoff und die Reduzierung der Einsatzmenge an Kieselsäure liegen. Der wasserbindende organische und/oder anorganische Füllstoff könnte hier als "Pfad" in der Beschichtung dienen, um das bewuchshemmende Metall und/oder dessen Oxid aus der Beschichtung zu transportieren und somit dessen Wirkung zu entfalten.

Bevorzugt handelt es sich bei dem wasserbindenden Füllstoff um Zinkoxid, Gips, Bariumsulfat, Schichtsilikate wie Talkum, Kaolin oder Glimmer, Carbonate wie Kreide oder Calcit oder Titandioxid.

Es sei hier anzumerken, dass insbesondere das Zinkoxid kein zugelassenes Biozid (also ein bewuchshemmendes Metalloxid) gemäß der "list of active substances and suppliers, vom 14.02.2020" ist, veröffentlicht von der European Chemicals Agency (ECHA), die für die Veröffentlichung der relevanten Substanzen gemäß des Artikels 95 der "Biocidal Products Regulation" (BPR), geändert durch die EU Richtlinie (EU) No 334/2014 vom 11.03.2014 verantwortlich ist.

Die weitere wesentliche Komponente des erfindungsgemäßen Lacksystems ist ein bewuchshemmendes Metall und/oder dessen Oxid. Unter bewuchshemmend ist zu verstehen, dass dieses Metall und/oder Oxid in der Lage ist, eine Oberflächenbesiedelung durch Tiere, inklusive Mikroorganismen, und Pflanzen auf Objekten, auf die die Partikel durch Beschichtung eingebracht sind, zu verzögern, einzudämmen oder zu verhindern, insbesondere bei Objekten, welche mit Wasser, insbesondere Meerwasser, in Kontakt stehen.

Das bewuchshemmende Metall wird bevorzugt aus der Gruppe bestehend aus Kupfer, Mangan, Silber, Wolfram, Vanadium und Zinn sowie deren Oxiden ausgewählt. Es ist auch möglich, dass das Lacksystem mehrere dieser bewuchshemmenden Metalle und/oder Oxide enthält. Die besten Ergebnisse zeigt ein Lacksystem, dessen Hauptbestandteil des bewuchshemmenden Metalls Kupfer oder Kupfer-(I)-oxid ist.

Das bewuchshemmende Metall und/oder Oxid liegt bevorzugt in sphärischer und/oder sphäroider Form vor und weist einen mittleren Partikeldurchmesser von 1 bis 20 $\mu$m auf. Es können jedoch auch andere Formen eingesetzt werden, wie beispielsweise nadelförmige Strukturen.

Die besten Ergebnisse werden erhalten, wenn der Durchmesser, oder im Falle nadelförmiger die Strukturen die längste Seite, des bewuchshemmenden Metall und/oder Oxid größer sind als der mittlere Aggregatdurchmesser der pyrogenen Kieselsäure. Besonders bevorzugt ist ein Verhältnis der Durchmesser 10 bis 1000.

Der Anteil an bewuchshemmendem Metall und/oder Oxid kann über weite Grenzen variiert werden. Bevorzugt weist das Lacksystem 0,5 bis 60 Gew.-%, bevorzugt 1 bis 40 Gew.-%, besonders bevorzugt 5 bis 30 Gew.-%, an bewuchshemmendem Metall und/oder Oxid auf. Auch der Anteil an pyrogener Kieselsäure im Lacksystem kann über weite Grenzen variiert werden.

Es wurde jedoch gefunden, dass das Lacksystem dann die besten bewuchshemmenden Eigenschaften zeigt, wenn der Anteil an pyrogener Kieselsäure 0,5 bis 30 Gew.-%, bevorzugt 1 bis 20 Gew.-%, besonders bevorzugt 2 bis 15 Gew.-%, bezogen auf das Lacksystem aufweist. Solch hohe Anteile können mit gewöhnlicher pyrogener Kieselsäure wie sie aus dem Flammprozess aufgrund deren stark verdickender Wirkung nicht erzielt werden.

REM-Aufnahmen eines Modell-Lacksystemes, welches $Cu_2O$-Partikel und eine pyrogene, vermahlene Kieselsäure enthält, zeigen, dass die Oberfläche der $Cu_2O$-Partikel dicht von feinteiliger, pyrogener Kieselsäure belegt ist. Dabei handelt es sich nicht wie im Stand der Technik beschrieben um Kern-Hülle-Strukturen, bei denen die Hülle fest an den Kern gebunden ist. Im vorliegenden Fall ist eher von elektrostatischen Wechselwirkungen auszugehen.

Vorzugsweise weist das erfindungsgemäße Lacksystem mindestens ein Co-Biozid auf.

Es können alle zugelassene Biozide eingesetzt werden, übliche Co-Biozide sind ausgewählt aus Bis(1-hydroxy-1H-pyridin-2-thionato-O,S)Kupfer (Kupferpyrithion), 4,5-Dichlor-2-octylisothiazol-3(2H)-on (DCOIT), Dichlor-N-[(dimethylamino)sulfonyl]fluor-N-(ptolyl)methansulfenamid (Tolylfluanid), Kupferthiocyanat, Kupferflocken (beschichtet mit einem Film aus aliphatischer Säure), 4-Bromo-2-(4-chlorophenyl)-5-(trifluoromethyl)-1H-pyrrol-3-carbonitril (Tralopyril), Medetomidin, N-(Dichlorofluormethylthio)-N',N-dimethyl-N-phenylsulfamid (Dichlofluanid), Zinkpyrithion, Zinkethylenbis(dithiocarbamat) (polymerisch) (Zineb),

Es ist ebenfalls vorstellbar, dass zugelassene Verbindungen ausgewählt aus alpha.,.alpha.',.alpha."-trimethyl-1,3,5-triazine-1,3,5(2H,4H,6H)-triethanol (HPT), 1,2-benzisothiazol-3(2H)-on (BIT), 2,2-dibromo-2-cyanoacetamid (DBNPA), 2-Phenoxyethanol, 2-Propensäure, 2-methyl-butyl ester Polymer mit Butyl 2-propenoat und Methyl 2-methyl-2-propenoat (CAS nr: 25322-99-0)/Polymerisches quaternäres Ammoniumbromid (PQ Polymer), 3,3'-methylenbis[5-methyloxazolidin] (Oxazolidin/MBO), 5-chlor-2-(4-chlorphenoxy)phenol (DCPP), 6-(phthalimido)peroxyhexansäure (PAP), Alkyldimethylbenzylammoniumchlorid, Ampholyt 20, Biphenyl-2-ol, Bromochlor-5,5-dimethylimidazolidin-2,4-dion (BCDMH/Bromochlorodimethylhydantoin), Bronopol, Chlorocresol, Zimtaldehyd/3-phenyl-propen-2-al, Zitronensäure, Clorophen, Kupfersulfatpentahydrat, D-Gluconsäure Verbindung mit N,N"-bis(4-chlorphenyl)-3,12-diimino-2,4,11,13-tetraazatetradecandiamidin (2:1) (CHDG), Didecyldimethylammoniumchlorid, Dimethyloctadecyl[3-(trimethoxysilyl)propyl]ammoniumchlorid, Monolinuron, Diuron, N-(3-aminopropyl)-N-dodecylpropan-1,3-diamin (Diamine), Poly(oxy-1,2-ethandiyl), .alpha.-[2-(didecylmethylammonio)ethyl]- .omega.-hydroxy-propanoat Salz (Bardap 26), PHMB(1600;1.8), Pyridine-2-thiol 1-oxid Natriumsalz, Natriumpyrithion, quarternäre Ammoniumverbindungen, Benzyl-C12-18-alkyldimethyl Salze mit 1,2-benzisothiazol-3(2H)-on 1,1-dioxid (1:1) (ADBAS), Silbernitrat, Silberphosphat Glass, Silberzink Zeolite, Natrium dichlorisocyanurat dihydrat, Natrium N-chlorbenzensulfonamid (Chloramine-B), Symclosene, Tosylchloramid Natrium (Chloramin T), Troclosene Natrium als Co-Biocid eingesetzt werden.

Eine herkömmliche wirksame Anti-Fouling-Beschichtung weist beispielsweise ein Verhältnis der Komponente Kupferoxid : Zinkoxid : Co-Biozid von ca. 3:1:1 im Trockenvolumen auf.

Mit dem erfindungsgemäßen Lacksystem können Beschichtungen hergestellt werden, die vorzugsweise ein Verhältnis der Komponente Metall und/oder dessen Oxid wasserbindender Füllstoff : Co-Biozid von ca. 1:1:1 im Trockenvolumen aufweisen.

Trotz Reduzierung der Einsatzmenge des bewuchshemmenden Metalls und/oder dessen Oxid konnte unerwartet festgestellt werden, dass die erfindungsgemäßen Beschichtungen die gleiche oder bessere Anti-Fouling-Eigenschaften aufweisen als herkömmliche Beschichtungen.

In der Regel enthält das erfindungsgemäße Lacksystem noch filmbildende Harze. Geeignete Polymere hierfür sind z.B. Acrylate, Methacrylate, Silikonharze, Polyester, Polyurethane und auf Naturstoffen basierende Harze. Bevorzugt enthält das Lacksystem quellbare oder wasserlösliche Harze, um eine Freisetzung der bewuchshemmenden Metalloxide zu erleichtern. Quellbare oder wasserlösliche Harze können Silylacrylate oder Silylmethacrylate, wie Tributylsilylacrylat, Triphenylsilylacrylat, Phenyldimthysilylacrylat, Diphenylmethysilylacrylat, Trimethylsilylacrylat, Triisopropy-

Isilylacrylat, oder die korrespondierenden Methacrylate oder Metallacrylate sein. Auch Kolophonium-basierte Harze können Bestandteil des erfindungsgemäßen Lacksystems sein.

Ein weiterer Gegenstand der Erfindung ist ein mit dem Lacksystem beschichtetes Substrat. Prinzipiell sind alle Substrate geeignet, beispielsweise solche aus Metall, Kunststoff oder Glasfaser. Die Beschichtung kann mittels bekannter Verfahren appliziert werden.

Die Applikation des erfindungsgemäßen Lacksystems kann im Allgemeinen durch Spritzapplikation stattfinden, kann aber auch bevorzugt durch andere Applikationstechniken wie z. B. Streichen, Rollen, Fluten, Tauchen, Gießen aufgetragen werden. Als Substrate eignen sich metallische Untergründe wie z. B. Stahl, Stahlguss, Edelstahl, Aluminium, Aluminiumguss oder feuerverzinkter Stahl. Für eine bessere Haftung kann das Substrat durch Sandstrahlen oder Anschleifen angeraut werden. Auch nichtmetallische Substrate wie Glas, Kunststoffe oder anorganische Substrate wie Keramiken, Steinzeug, Beton etc. können zum Einsatz kommen.

Vorzugsweise weist das beschichtete Substrat eine theoretische Freisetzungsrate des bewuchshemmenden Metalls und/oder Metalloxids von mindestens 10 $\mu$g/cm$^2$/Tag bis maximal 30 $\mu$g/cm$^2$/Tag, gemessen nach ASTM D 6442 auf.

Ein weiterer Gegenstand der Erfindung ist die Verwendung des Lacksystems für die Beschichtung des aquatischen Bereiches eines Sportbootes, eines kommerziellen Schiffes, eines in Wasser eintauchenden Bauwerkes, wie Bootsstege, Kaimauern, Ölbohrplattformen, Fahrwassermarkierungen oder Messsonden.

Die vorliegende Erfindung erlaubt die Herstellung eines Lacksystems mit einer bewuchshemmenden Komponente und einer speziellen, pyrogenen Kieselsäure mit hoher Stampfdichte und niedriger Verdickung. Zur Herstellung werden die Komponenten bei niedrigem Energieeintrag in die Lackmatrix eingerührt, beispielsweise mittels eines Dissolvers. Hohe Energieeinträge, wie im Stand der Technik beschrieben, sind nicht nötig.

Vorzugsweise werden die bewuchshemmenden Metalle und/oder deren Oxide und pyrogene Kieselsäure mit einer BET-Oberfläche von 150 bis 400 m$^2$/g, bestimmt nach DIN ISO 99277, mit einer Stampfdichte von 100 bis 300 g/l, bestimmt nach DIN EN ISO 787/11 und mit einer Verdickung von weniger als 500 mPas bei 25°C, gemessen wie in der Beschreibung offenbart, in eine Lackmatrix zur Bildung elektrostatischer Wechselwirkungen zwischen den bewuchshemmenden Metalloxid-Partikeln und der pyrogenen Kieselsäure eingerührt.

Weiterhin werden bevorzugt vor dem Einrühren in die Lackmatrix die pyrogene Kieselsäure mit einem spezifischen Energieeintrag von 200 bis 2000 kJ/kg, bevorzugt 500 bis 1800 kJ/kg, ganz besonders bevorzugt 700 bis 1500 kJ/kg, berechnet gemäß

$$\text{Spezifischer Energieeintrag} = (P_D - P_{D,0}) \times t / m,$$

mit $P_D$ = gesamte eingetragene Leistung,
$P_{D,0}$ = Leerlaufleistung,
$t$ = Zeit des Energieeintrages,
$m$ = Masse der eingesetzten Kieselsäure, gemahlen.

Bevorzugt wird das Einrühren der Kieselsäure und Metalle und/oder deren Oxide bei einer Scherrate von 1000 U/min bis 5500 U/min, bevorzugt 3500 - 4000 U/min für 5 - 180 Minuten, bevorzugt 15 - 60 Minuten, besonders bevorzugt 30 - 45 Minuten bei einer Temperatur bis zu 60°C mit oder ohne Glasperlen durchgeführt.

Etwaiger Temperaturanstieg während der Dispergierung von über 60°C sollte durch geeignete, dem Fachmann bekannte Maßnahmen herabgesetzt werden. Dazu eignet sich z.B. ein doppelwandiger Mahltopf mit einer Wasserkühlung.

Es kann zweckmäßigerweise sein, dass abhängig von der konkreten Zusammensetzung die Herabsetzung des Temperaturanstiegs auch bei einer Temperatur unterhalb von 60°C erfolgen kann.

Vorzugsweise wird das erfindungsgemäße Verfahren ohne Glasperlen durchgeführt. Denn bei der Einarbeitung mit Mahlkörpern, wie z.B. Glasperlen, Zirkonoxidperlen, treten Materialverluste bis zu 50 % auf, da die Komponente an den Mahlkörpern haftet. Üblicherweise werden die Glasperlen nach ihrem Einsatz verworfen. Dagegen werden die teuren Cer-stabilisierten Zirkonoxidperlen durch aufwendige Aufreinigung mittels großer Lösungsmittelmengen wiedergewonnen.

Bevorzugt werden bei der industriellen Anwendung beispielweise in einer horizontalen Perlmühle oder Tauchmühle, insbesondere wenn hohe Mengen Kieselsäure eingesetzt wird, Glasperlen als Mahlgüter für das erfindungsgemäße Verfahren eingesetzt. Somit kann eine hohe Oberflächengüte gewährleistet und zudem Kosten gespart werden, was bei der Verwendung von teuren Cer-stabilisierten Zirkonoxidperlen nicht der Fall ist.

Eine weitere Erfindung ist die Verwendung der oben beschriebenen pyrogenen Kieselsäure zur Herstellung eines Lacksystems, bei dem das Gewichtsprozent der Kieselsäure $\leq$ dem Gewichtsprozent des Metalls und/oder dessen Oxids bezogen auf das Gesamtgewicht des Lacksystems ist.

Die folgenden Beispiele dienen dem Fachmann allein zur Erläuterung dieser Erfindung und stellen keinerlei Beschränkung des beanspruchten Gegenstands oder des beanspruchten Verfahrens dar.

**Methoden**

**Allgemeine Bedingungen**

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden nachfolgend Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

**Allgemeine Herstellung**

Die Formulierungen wurden mittels eines Dispermaten des Typs CN-40F2 der Firma VMA Getzmann hergestellt. Die Lacke wurden in einem doppelwandigem 1L Stahl-Mahltopf der Firma Getzmann hergestellt.
Folgende drei Verfahren wurden durchgeführt:

1) Mit Glasperlen

• Es wurde eine Teflonscheibe mit dem Durchmesser von 50 mm benutzt. Nach Einwaage der filmbildenden Harze und Lösemittel wurden Glasperlen mit dem Durchmesser von 2,4 - 2,9 mm zugegeben. Anschließend wurden die Kieselsäure sowie die Pigmente und Füllstoffe dazu gewogen und bei einer Umdrehungszahl von 2500 U/min 15 Minuten dispergiert. Das Metall und/oder Metalloxid wurde hinzugegeben und bei 2000 U/min weitere 5 Minuten dispergiert. Die restlichen Bestandteile der Formulierungen wurden bei 1500 U/min hinzugegeben und der Ansatz wurde weitere 5 Minuten gerührt.

2) Ohne Glasperlen

• Es wurde eine Zahnscheibe mit einem Durchmesser von 50 mm verwendet. Nach Vorlage der filmbildenden Harze und Lösemittel wurde unter Rühren die Kieselsäure sowie die Pigmente und Füllstoffe zugegeben und bei einer Scherrate von 3500 U/min 30 min lang dispergiert. Anschließend wurde das Metall und/oder Metalloxid bei einer Scherrate von 500 U/min hinzugegeben und erneut 20 Minuten bei 2000 U/Min dispergiert. Anschließend wurden die restlichen Bestandteile der Formulierungen unter leichtem Rühren bei 400 U/min hinzugefügt.

3) Mit Zirkonoxidperlen

• Es wurde eine Dreifach-Mahlscheibe mit dem Durchmesser von 50 mm benutzt. Nach Einwaage der filmbildenden Harze und Lösemittel wurden Cer-stabilisierte Zirkonoxidperlen mit dem Durchmesser von 2-3 mm zugegeben. Anschließend wurde die Kieselsäure dazu gewogen und bei einer Umdrehungszahl von 2000 U/min 15 Minuten dispergiert. Das Metall und/oder Metalloxid sowie die weiteren Füllstoffe und Pigmente wurde hinzugegeben und bei 2000 U/min weitere 5 Minuten dispergiert. Die restlichen Bestandteile wurden bei 1500 U/min hinzugegeben und der Ansatz wurde weitere 5 Minuten gerührt.
Die Vergleichsformulierungen wurden entsprechend hergestellt; jedoch variieren hierbei die Bestandteile und/oder deren Einsatzmenge.
Die Rezepturen können den jeweiligen Tabellen entnommen werden.
Im Sinne dieser Erfindung werden die Begriffe Lacksystem, System, Formulierung, Zusammensetzung, Rezeptur, Lack als Synonyme verstanden.
Im Sinne dieser Erfindung werden die Begriffe Film, Beschichtung, Lackfilm, Lackoberfläche als Synonyme verstanden.

**Applikation**

Die auf das Substrat aufgebrachten erfindungsgemäßen Lacksysteme und Vergleichslacksysteme verfilmen physikalisch bei Raumtemperatur. Das Aussehen der Beschichtung wurde beurteilt. Die Oberfläche soll einen geschlossenen, homogenen Film bilden. Etwaige Lackfehler, wie Krater, Nadelstiche, Kantenflucht oder ähnliches sind aufzulisten. Die Oberflächengüte wird ebenfalls visuell beurteilt. Dabei begutachtet man die Rauigkeit des Lackfilms.

**Trockenzeitmessungen**

Es wurde die Trockenzeit mittels eines Drying Recorders Typ BK3 (The Mickle Laboratory Engineering Co. Ltd., Goose Green, Gomshall, Guildford, Surrey GU5 9LJ., U.K.) nach ASTM D5895 durchgeführt.

**Pendelhärte**

Zur Beurteilung der Härte der erfindungsgemäßen Beschichtungen und der Vergleichsbeschichtungen eignet sich die Pendeldämpfung nach König oder Persoz, definiert in DIN EN ISO 1522. Analog dieser Prüfmethode wurden die Härtegrade mittels eines Pendelhärtemessgeräts (Modell 299/300, Erichsen GmbH & Co. KG) durchgeführt.

**Martenshärte**

Zur Bestimmung der Eindringhärte (Martenshärte) wurde ein Fischerscope HM2000 der Firma Helmut Fischer GmbH verwendet. Die Martenshärte wurde nach ISO 14577 bestimmt.

**Sprödigkeit**

Zur Bestimmung der Sprödigkeit wurden Messungen mittels der Lack- und Farben-Prüfmaschine Modell 202 EM der Firma Erichsen nach DIN EN ISO 1520 durchgeführt. Angegeben wird die Erichsentiefe in mm.

**Viskosität und Lagerung**

Die angegebenen Viskositäten der Lacksysteme wurden mit einem Anton Paar Rotationsviskosimeter MC103 und der Messgeometrie PP60 bei 23 ° C bestimmt. Es wurden mehrere Messpunkte zwischen den Scherraten 0,1 und 1000 1/s aufgenommen. Zur Bestimmung der Lagerfähigkeit wurden die Lackformulierungen 4 Wochen in einem Trockenofen bei 50 °C aufbewahrt. Die Lagerstabilität wurde anhand der Viskositätsunterschiede beurteilt.

**Bestimmung der Anti-Fouling-Eigenschaft**

Die mit dem erfindungsgemäßen Lacksystem hergestellten Beschichtungen wurden zu statischen Auslagerungsexperimenten in die Nordsee (Hooksiel bzw. Norderney) verbracht.

Die Auslagerung der beschichteten PVC Panels erfolgte über eine Saison von März bis Oktober (8 Monate) in einer Tiefe von 20 cm unter der Wasseroberfläche. Alle 4 Wochen wurden die Testpanels visuell untersucht und hinsichtlich des Bewuchses bewertet.

**Tabelle 1: Verwendete Rohstoffe**

| Rohstoff | Markenname | Hersteller | |
|---|---|---|---|
| Eisenoxidrot | BAYFERROX® 130 M | LANXESS | |
| Kupferoxid | Nordox Paint Grade Red Kupfer (I)-oxid | NORDOX | |
| Zinkoxid | Zinkoxid Red Seal | EverZinc | |
| Weichmacher | VESTINOL® 9 | Evonik Performance Materials GmbH | |
| Polyamidwachs | DISPARLON® 6900-20X | King Industries | |
| Kolophoniumlösung, 65% ig in Xylol | Procol ST | MEGARA RESINS® | |
| Acrylatlösung, 40 % ig in Xylol | Paraloid™B-66 40 %ig | Dow Chemical | |
| Dispergiermittel | TEGO® Dispers 628 | Evonik Resource Efficiency GmbH | |
| Strukturmodifiziertes Silica | VP 4200 (SMS 1), AEROSIL® R 9200 (SMS 2) | Evonik Resource Efficiency GmbH | |

(fortgesetzt)

| Rohstoff | Markenname | Hersteller | |
|---|---|---|---|
| Titandioxid | KRONOS® 2310 | Kronos International | |
| Gips | Terra Alba | ACG Materials | |
| Aromatischer Kohlenwasserstoff | SOLVESSO™ 150 | Brenntag | |
| Kupferpyrithion | Copper Omadine® Powder AF | Lonza Ltd | |
| Lösemittel | Butylacetat | Diverse | |
| Lösemittel | Methoxypropylacetat | Diverse | |
| Silylacrylatlösung, 35 %ig in Xylol | - | Hergestellt gemäß WO 2005/005516, Beispiel 3a | |
| Kupferacrylatlösung, 35%ig in Xylol | - | Hergestellt gemäß EP 0779304, Beispiel 1 | |

**1. Herstellung von Lacksystemen mit Kolophonium**

Die Formulierungen wurden nach der allgemeinen Herstellvorschrift 2) ohne Glasperlen hergestellt. Die Rohstoffe sind aus Tabelle 1 zu entnehmen. Tabelle 2 (erfindungsgemäß) und Tabelle 3 (Vergleichsbeispiele) zeigen die eingesetzten Mengen der Rohstoffe auf.

Es wurden erfindungsgemäße Lacksysteme Ka - Ke und Vergleichslacksysteme VK1-VK4 hergestellt.

Das Trockenvolumenverhältnis (dryV%) von Kupferoxid : Zinkoxid : Co-Biozid der Ka - Ke lag bei ca. 1 : 1 : 1 und das Gewichtverhältnis von Kieselsäure : Kupferoxid lagen bei 1:5, 1:2, 3:5, 4:5 oder 1:1. Die Menge an Kupferoxid ist demnach gleich oder größer als die Menge der Kieselsäure.

VK1 stellt ein übliches Lacksystem dar, bei dem das Trockenvolumenverhältnis von Kupferoxid : Zinkoxid : Co-Biozid ca. 3 : 1 : 1 betrug und keine Kieselsäure eingesetzt wurde.

Bei VK2 betrug das Trockenvolumenverhältnis von Kupferoxid : Zinkoxid : Co-Biozid ca. 1 : 1 : 1, wobei keine Kieselsäure eingesetzt wurde.

VK3 ist ein Lacksystem mit einem Gewichtverhältnis von 10 g Kieselsäure : 5 g Kupferoxid analog EP 3 271 426, wobei Zinkoxid zugesetzt wurde.

VK4 ist ein Lacksystem gemäß EP 3 271 426.

**Tabelle 2**

| Rohstoff | Ka[g] | dryV% | Verhältnis | Kb [g] | dryV% | Verhältnis | Kc [g] | dryV% | Verhältnis | Kd [g] | dryV% | Verhältnis | Ke[g] | dryV% | Verhältnis |
|---|---|---|---|---|---|---|---|---|---|---|---|---|---|---|---|
| Procol ST | 21 | 37,4 | | 21 | 35,3 | | 21 | 35,3 | | 21 | 34,3 | | 21 | 33,4 | |
| VESTINOL® 9 | 6 | 18,6 | | 6 | 17,6 | | 6 | 17,6 | | 6 | 17,1 | | 6 | 16,6 | |
| Paraloid™ B-66 40 %ig | 15 | 16,4 | | 15 | 15,5 | | 15 | 15,5 | | 15 | 15,1 | | 15 | 14,7 | |
| TEGO® Dispers 628 | 2 | 3,1 | | 2 | 2,9 | | 2 | 2,9 | | 2 | 2,8 | | 2 | 2,7 | |
| SMS 1 | 2 | 3 | 0,56 | 5 | 8,5 | 1,68 | 6 | 8,5 | 1,68 | 8 | 11,0 | 2,24 | 10 | 13,4 | 2,8 |
| SOLVESSO™ 150 | 12 | 0 | | 12 | 0 | | 12 | 0 | | 12 | 0 | | 12 | 0 | |
| Xylol | 13 | 0 | | 10 | 0 | | 9 | 0 | | 7 | 0 | | 5 | 0 | |
| Kupferpyrithion | 4 | 6 | 1,12 | 4 | 5,7 | 1,12 | 4 | 5,7 | 1,12 | 4 | 5,5 | 1,12 | 4 | 5,4 | 1,12 |
| KRONOS® 2310 | 3 | 2,2 | | 3 | 2,1 | | 3 | 2,1 | | 3 | 2,0 | | 3 | 2,0 | |
| Gips | 2 | 2,7 | | 2 | 2,6 | | 2 | 2,6 | | 2 | 2,5 | | 2 | 2,4 | |
| Zinkoxid | 10 | 5,4 | 1 | 10 | 5,1 | 1 | 10 | 5,1 | 1 | 10 | 4,9 | 1 | 10 | 4,8 | 1 |
| Kupferoxid | 10 | 5,1 | 0,95 | 10 | 4,8 | 0,95 | 10 | 4,8 | 0,95 | 10 | 4,7 | 0,95 | 10 | 4,6 | 0,95 |
| Summe | 100 | 100 | | 100 | 100 | | 100 | 100 | | 100 | 100 | | 100 | 100 | |

**Tabelle 3**

| Rohstoff | VK1 [g] | dryV% | Verhältnis | VK2 [g] | dryV% | Verhältnis | VK3 [g] | dryV% | Verhältnis | VK4 [g] | dryV% | Verhältnis |
|---|---|---|---|---|---|---|---|---|---|---|---|---|
| Procol ST | 18 | 36,1 | | 18 | 41,3 | | 21 | 33,2 | | 23 | 35,1 | |
| VESTINOL® 9 | 2 | 7,6 | | 2 | 8,7 | | 6 | 18,1 | | 7 | 18,6 | |
| Paraloid™ B-66 40 %ig | 9 | 10,3 | | 9 | 11,7 | | 15 | 13,5 | | 17 | 16,0 | |
| TEGO® Dispers 628 | 2 | 3,4 | | 2 | 3,9 | | 2 | 2,7 | | 2 | 2,6 | |
| SMS 1 | 0 | 0,0 | | 0 | 0,0 | | 10 | 14,6 | 2,80 | 10 | 12,9 | |
| SOLVESSO™ 150 | 10 | 0,0 | | 19 | 0,0 | | 12 | 0,0 | | 12 | 0,0 | |
| Xylol | 7 | 0,0 | | 18 | 0,0 | | 10 | 0,0 | | 10 | 0,0 | |
| Kupferpyrithion | 4 | 7,4 | 1,12 | 4 | 8,5 | 1,12 | 4 | 5,8 | 1,12 | 4 | 5,2 | 1 |
| KRONOS® 2310 | 4 | 3,0 | | 4 | 3,4 | | 3 | 1,8 | | 8 | 5,0 | |
| Gips | 4 | 6,7 | | 4 | 7,7 | | 2 | 2,7 | | 2 | 2,3 | |
| Zinkoxid | 10 | 6,6 | 1 | 10 | 7,6 | 1 | 10 | 5,2 | 1 | 0 | 0,0 | 0 |
| Kupferoxid | 30 | 18,8 | 2,85 | 10 | 7,2 | 0,95 | 5 | 2,5 | 0,47 | 5 | 2,2 | 0,43 |
| **Summe** | 100 | 100 | | 100 | 100 | | 100 | 100 | | 100 | 100 | |

**1.1 Überprüfung der Lagerstabilität**

**1.1.1 Messung der Viskositäten**

**Tabelle 4**

| | | Kc | VK1 |
|---|---|---|---|
| Beschreibung | vor Lagerung, nach 24 Std. | homogen | leichtes Aufschwimmen von Lösemitteln |
| | nach 4 Wochen Lagerung 50°C | kein Ausschwimmen von Lösemitteln, leichter Bodensatz, gut aufrührbar | starker Bodensatz, schwer aufrührbar, starkes Aufschwimmen von Lösemitteln |
| Scherrate 0,1 [1/s] | vor Lagerung | 11652 | 34169 |
| Scherrate 100 [1/s] | | 1355,1 | 430 |
| Scherrate 0,1 [1/s] | nach 4 Wochen Lagerung 50°C | 13174 | 83203 |
| Scherrate 100 [1/s] | | 1792 | 916,27 |

Es konnte festgestellt werden, dass das erfindungsgemäße Lacksystem Kc eine bessere Lagerstabilität aufweist als das herkömmliche System VK1 ohne Kieselsäure. Die Viskositätsunterschiede zwischen den Messungen vor und nach Lagerung sind wesentlich kleiner im System Kc als im System VK1.

Nach 24h und nach 4-wöchiger Lagerung konnte kein Aufschwimmen von Lösemitteln sowie nur ein leichter Bodensatz von Feststoffen in Kc festgestellt werden, der wieder gut aufrührbar war.

Verändert sich die Viskosität des Lackes während der Lagerung stark, erschwert sich die Verarbeitung z.B. bei der Spritzapplikation. Gute und zuverlässige Lackformulierungen haben ein stabiles Viskositätsprofil, wie es die erfindungsgemäßen Lacke aufweisen.

**1.2 Prüfung der Anti-Fouling- und Lackeigenschaften**

Für die weiteren Prüfungen wurden die hergestellten Lacksysteme mit einem 300 μm Spiralrakel auf gereinigtem für die jeweilige Prüfmethode benötigten Untergrund appliziert.

**1.2.1 Visuelle Beurteilung und Trockenzeitmessung**

Es wurden Ka-Ke, VK2 - VK5 auf Aluminium appliziert. Es bildeten sich homogene geschlossene Lackfilme auf, die innerhalb von 0,5 h durchtrockneten. Die getrockneten Lackoberflächen zeigten keine Fehlstellen.

**1.2.2 Messung der Martenshärte**

Es wurden Kc, VK2 - VK5 auf Glasplatten appliziert. Nach einer Trocknungszeit von 7 Tagen wurde die Martenshärte gemessen.

**Tabelle 5:**

| | Martenshärte |
|---|---|
| Kc | 255 |
| VK2 | 225 |
| VK3 | 173 |
| VK4 | 228 |

(fortgesetzt)

| | Martenshärte |
|---|---|
| VK5 | 219 |

Die erfindungsgemäße Beschichtung weist eine höhere Martenshärte auf. Somit wird sie gegenüber Schlägen und Abrasion beständiger.

### 1.2.3 Bestimmung der Anti-Fouling-Eigenschaft

Die Formulierungen Ka - Ke und VK2 - VK5 wurden auf PVC Platten appliziert und von März 2018 bis Oktober 2019 an der deutschen Nordsee im Meerwasser ausgelagert.
Die Gesamtbewertung erfolgte mittels einer wie folgt dargestellten Skala von

0 = kein Bewuchs
1 = minimaler Bewuchs, sehr leicht zu entfernbar
2 = leichter Bewuchs, sehr leicht zu entfernen
3 = mittelstarker Bewuchs, deutliche Rückstände
4 = starker Bewuchs, starke Rückstände
5 = sehr starker Bewuchs, nicht zu entfernen

**Tabelle 6**

| | Beurteilung |
|---|---|
| Ka | 1 |
| Kb | 0 |
| Kc | 0 |
| Kd | 0 |
| Ke | 0 |
| VK2 | 0 |
| VK3 | 5 |
| VK4 | 3 |
| VK5 | 3 |

Die guten Ergebnisse in der Meerwasserauslagerung zeigen, dass durch die Zugabe von Kieselsäure die Effizienz der erfindungsgemäßen Lacksysteme erhöht werden kann. Die eingesetzte Kupferoxidmenge kann deutlich gesenkt werden.
VK5 und sogar VK4 zeigen eine schwächere Anti-Fouling-Wirkung.

### 1.4 Messung der Sprödigkeit

Zur Beurteilung der Sprödigkeit wurden die in Tabelle 7 aufgeführten Formulierungen auf Aluminiumblechen appliziert.

**Tabelle 7**

| Formulierung | Tiefung [mm] |
|---|---|
| Ka | 9,4 |
| Kb | 6,7 |
| Kc | 3,1 |
| Kd | 2,8 |

(fortgesetzt)

| Formulierung | Tiefung [mm] |
|---|---|
| VK4 | 1,3 |
| VK5 | 1,5 |

VK4 und VK5 zeigen eine erhöhte Sprödigkeit. Die erfindungsgemäßen Beschichtungen Ka - Kd sind dagegen flexibler.

**2. Herstellung von Lacksystemen mit Silyacrylat**

Die Formulierungen wurden nach der allgemeinen Herstellvorschrift 2) ohne Glasperlen hergestellt. Die Rohstoffe sind aus Tabelle 1 zu entnehmen. Die Einsatzmenge der erfindungsgemäßen Lacksysteme Ya und Yb sowie Vergleichslacksysteme VY1 und VY2 sind in Tabelle 8 aufgeführt.

Das Trockenvolumenverhältnis von Kupferoxid : Zinkoxid : Co-Biozid der Ya - Yb lag bei ca. 1 : 1 : 1 und die Gewichtverhältnisse von Kieselsäure : Kupferoxid lagen bei 1:2 oder 2:3. Die Menge an Kupferoxid ist demnach größer als die Menge der Kieselsäure.

VY1 stellt ein übliches Lacksystem dar, bei dem das Trockenvolumenverhältnis von Kupferoxid : Zinkoxid : Co-Biozid ca. 3 : 1 : 1 betrug und keine Kieselsäure eingesetzt wurde.

Bei VY2 betrug das Trockenvolumenverhältnis von Kupferoxid : Zinkoxid : Co-Biozid ca. 1 : 1 : 1, wobei keine Kieselsäure eingesetzt wurde.

**Tabelle 8**

| Rohstoffe | Ya | | | Yb | | | VY1 | | | VY2 | | |
|---|---|---|---|---|---|---|---|---|---|---|---|---|
| | Gew. [%] | dry V % | Verhältnis | Gew. [%] | dry V % | Verhältnis | Gew. [%] | dry V % | Verhältnis | Gew. [%] | dry V % | Verhältnis |
| Silylacrylat Lösung, 35 %ig in Xylol | 20 | 21,20 | | 20,75 | 22,22 | | 15,75 | 17,61 | | 15,75 | 20,70 | |
| PROCOL ST 65 %ig in Xylol | 5 | 12,35 | | 5 | 12,47 | | 5 | 13,03 | | 5 | 15,31 | |
| Kupferpyrithion | 3,15 | 6,58 | 0,7 | 3,15 | 6,65 | 1,0 | 3,15 | 6,95 | 1,0 | 3,15 | 8,16 | 0,7 |
| BAYFERROX® 130 M | 4 | 3,34 | | 4 | 3,38 | | 4 | 3,53 | | 4 | 4,15 | |
| KRONOS® 2310 | 6 | 6,12 | | 6 | 6,18 | | 6 | 6,45 | | 6 | 7,59 | |
| SMS 1 | 7,1 | 14,84 | | 8 | 16,89 | | 0 | 0,00 | | 0 | 0,00 | |
| $Cu_2O$ | 14,2 | 10,11 | 1,1 | 12 | 8,63 | 1,3 | 37 | 27,80 | 3,9 | 14,2 | 12,54 | 1,1 |
| Zinkoxid | 11,8 | 8,81 | 1,0 | 9 | 6,79 | 1,0 | 9 | 7,09 | 1,0 | 11,8 | 10,92 | 1,0 |
| VESTINOL® 9 | 3,6 | 15,36 | | 3,6 | 15,51 | | 3,6 | 16,20 | | 3,6 | 19,04 | |
| DISPARLON® 6900-20X | 1,5 | 1,28 | | 1,5 | 1,29 | | 1,5 | 1,35 | | 1,5 | 1,59 | |
| Xylol | 23,65 | 0 | | 27 | 0 | | 15 | 0 | | 35 | 0,00 | |
| Summe | 100 | 100,00 | | 100 | 100,00 | | 100 | 100,00 | | 100 | 100,00 | |

2.1 **Prüfung der Anti-Fouling- und Lackeigenschaften**

Die hergestellten Lacksysteme wurden mit einem 300 $\mu$m Spiralrakel auf gereinigtem für die jeweilige Prüfmethode benötigten Untergrund appliziert.

**2.1.1 Visuelle Beurteilung und Trockenzeitmessung**

Es bildeten sich homogene geschlossene Lackfilme, die innerhalb von 0,5 h durchtrockneten. Die getrockneten Lackoberflächen zeigten keine Fehlstellen.

2.1.2 **Messung der Pendelhärte**

Zur Messung der Pendelhärte wurden die in Tabelle 9 aufgeführten Formulierungen auf Aluminiumblechen appliziert.

**Tabelle 9**

| Formulierung | Pendelschläge nach König |
|---|---|
| Ya | 63 |
| Yb | 47 |
| VY1 | 29 |
| VY2 | 23 |

Die Ergebnisse zeigen, dass die Härte der mit den erfindungsgemäßen Lacksystemen hergestellten Beschichtungen Ya und Yb größer ist als die der Vergleichsbeispiele. Somit weisen die erfindungsgemäßen Beschichtungen eine größere Beständigkeit gegen Stöße und Abrasionen auf.

**2.1.3 Bestimmung der Anti-Fouling Eigenschaft**

Die Formulierungen Ya und Yb und VY1 und VY2 wurden auf PVC Platten appliziert und von März 2018 bis Oktober 2019 an der deutschen Nordsee im Meerwasser ausgelagert.
Die Gesamtbewertung erfolgte mittels einer wie folgt dargestellten Skala von

0 = kein Bewuchs
1 = minimaler Bewuchs, sehr leicht zu entfernbar
2 = leichter Bewuchs, sehr leicht zu entfernen
3 = mittelstarker Bewuchs, deutliche Rückstände
4 = starker Bewuchs, starke Rückstände
5 = sehr starker Bewuchs, nicht zu entfernen

**Tabelle 10**

| Formulierung | Ergebnis |
|---|---|
| Ya | 0 |
| Yb | 0 |
| VY1 | 0 |
| VY2 | 4 |

Die Beschichtungen, die mit den erfindungsgemäßen Systemen Ya und Yb hergestellt wurden, mit einem Verhältnis von ca. 1:1:1 Kupferoxid : Zinkoxid : Co-Biozid im Trockenvolumen zeigen ebenfalls gute Ergebnisse in der Meerwasserauslagerung wie mit einem System VY1 mit einem Verhältnis von ca. 3:1:1 Kupferoxid : Zinkoxid : Co-Biozid im Trockenvolumen. Die eingesetzte Kupferoxidmenge kann deutlich gesenkt werden. Wird der Gehalt an Kupferoxid reduziert, ohne Kieselsäure einzusetzen, wie bei VY2, konnte ein starker Bewuchs der Beschichtungsoberfläche innerhalb des Testzeitraumes festgestellt werden.

**3. Herstellung von Lacksystemen mit Kupferacrylat**

Die Formulierungen wurden nach der allgemeinen Herstellvorschrift 2) ohne Glasperlen hergestellt. Die Rohstoffe können der Tabelle 1 entnommen werden. Die Einsatzmenge der erfindungsgemäßen Lacksysteme Za und Zb sowie Vergleichslacksysteme VZ1 und VZ2 sind in Tabelle 11 aufgeführt.

Das Trockenvolumenverhältnis von Kupferoxid : Zinkoxid : Co-Biozid der Za - Zb lag bei ca. 1 : 1 : 1 und die Gewichtverhältnisse von Kieselsäure : Kupferoxid lagen bei 1:2 mit zwei verschiedenen Silikatypen. Die Menge an Kupferoxid ist demnach größer als die Menge der Kieselsäure.

VZ1 stellt ein übliches Lacksystem dar, bei dem das Trockenvolumenverhältnis von Kupferoxid : Zinkoxid : Co-Biozid ca. 3 : 1 : 1 betrug und keine Kieselsäure eingesetzt wurde.

Bei VZ2 betrug das Trockenvolumenverhältnis von Kupferoxid : Zinkoxid : Co-Biozid ca. 1 : 1 : 1, wobei keine Kieselsäure eingesetzt wurde.

**Tabelle 11**

| Rohstoffe | Za | | | Zb | | | VZ1 | | | VZ2 | | |
|---|---|---|---|---|---|---|---|---|---|---|---|---|
| | Gew. [%] | DryV [%] | Verhältnis | Gew. [%] | DryV [%] | Verhältnis | Gew. [%] | DryV [%] | Verhältnis | Gew. [%] | DryV [%] | Verhältnis |
| Kupferacrylat Lösung, 35 % in Xylol | 41,1 | 40,00 | | 41,1 | 40,31 | | 40,85 | 41,01 | | 40,85 | 46,04 | |
| Kupferpyrithion | 3,15 | 6,05 | 0,77 | 3,15 | 6,10 | 0,80 | 3,15 | 6,24 | 0,81 | 3,15 | 7 | 0,81 |
| BAYFERROX® 130 M | 4 | 3,07 | | 4 | 3,10 | | 4 | 3,17 | | 4 | 3,56 | |
| KRONOS® 2310 | 6 | 5,62 | | 6 | 5,66 | | 6 | 5,80 | | 6 | 6,51 | |
| SMS 1 | 6,8 | 13,06 | | 0 | 0 | | 0 | 0 | | 0 | 0 | |
| SMS 2 | 0 | 0,00 | | 6,8 | 13,16 | | 0 | 0 | | 0 | 0 | |
| $CU_2O$ | 13,8 | 9,03 | 1,15 | 13,1 | 8,64 | 1,14 | 30 | 20,24 | 2,63 | 13,8 | 10,45 | 1,21 |
| Zinkoxid | 11,4 | 7,82 | 1 | 10,95 | 7,57 | 1 | 10,9 | 7,71 | 1 | 10,9 | 8,66 | 1 |
| VESTINOL® 9 | 3,6 | 14,18 | | 3,6 | 14,29 | | 3,6 | 14,62 | | 3,6 | 16,42 | |
| DISPARLON® 6900-20X | 1,5 | 1,18 | | 1,5 | 1,18 | | 1,5 | 1,21 | | 1,5 | 1,36 | |
| Xylol | 8,65 | 0,00 | | 9,8 | 0 | | 0 | 0 | | 16,2 | 0 | |
| *Summe* | *100* | *100* | | *100* | *100* | | *100* | *100* | | *100* | *100* | |

### 3.1 Prüfung der Anti-Fouling- und Lackeigenschaften

Die hergestellten Lacksysteme wurden mit einem 300 $\mu$m Spiralrakel auf gereinigtem für die jeweilige Prüfmethode benötigten Untergrund appliziert.

### 3.1.1 Visuelle Beurteilung und Trockenzeitmessung

Nach der Applikation bildeten sich homogene geschlossene Lackfilme, die innerhalb von 0,5 h durchtrockneten. Die getrockneten Lackoberflächen zeigten keine Fehlstellen.

### 3.1.2 Messung der Pendelhärte

Zur Messung der Pendelhärte wurden die Formulierungen auf Aluminiumblechen appliziert.

**Tabelle 12**

| Formulierung | Pendelschläge nach König |
|---|---|
| Za | 25 |
| Zb | 23 |
| VZ1 | 12 |
| VZ2 | 12 |

Die mit den erfindungsgemäßen Lacksystemen Za und Zb hergestellten Beschichtungen zeigen höhere Härte auf als die Vergleichsbeschichtungen. Somit weisen sie eine größere Beständigkeit gegen Stöße und Abrasionen auf.

### 3.1.3 Bestimmung der Anti-Fouling-Eigenschaft

Die Formulierungen Za und Zb und VZ1 und VZ2 wurden auf PVC Platten appliziert und von März 2018 bis Oktober 2019 an der deutschen Nordsee im Meerwasser ausgelagert.
Die Gesamtbewertung erfolgte mittels einer wie folgt dargestellten Skala von

0 = kein Bewuchs
1 = minimaler Bewuchs, sehr leicht zu entfernbar
2 = leichter Bewuchs, sehr leicht zu entfernen
3 = mittelstarker Bewuchs, deutliche Rückstände
4 = starker Bewuchs, starke Rückstände
5 = sehr starker Bewuchs, nicht zu entfernen

**Tabelle 13**

| Formulierung | Ergebnis |
|---|---|
| Za | 0 |
| Zb | 0 |
| VZ1 | 0 |
| VZ2 | 4 |

Die Beschichtungen, die mit den erfindungsgemäßen Systemen Za und Zb hergestellt wurden, mit einem Verhältnis von ca. 1:1:1 Kupferoxid : Zinkoxid : Co-Biozid im Trockenvolumen zeigen ebenfalls gute Ergebnisse in der Meerwasserauslagerung wie mit einem System VZ1 mit einem Verhältnis von ca. 3:1:1 Kupferoxid : Zinkoxid : Co-Biozid im Trockenvolumen. Die eingesetzte Kupferoxidmenge kann deutlich gesenkt werden. Wird der Gehalt an Kupferoxid reduziert, ohne Kieselsäure einzusetzen, wie bei VZ2, konnte ein starker Bewuchs der Beschichtungsoberfläche innerhalb des Testzeitraumes festgestellt werden.

**4. Erfindungsgemäße Verfahren**

Die Formulierungen Za und Zb aus Tabelle 11 wurden gemäß oben beschriebenen Herstellungsvorschriften hergestellt. Herstellvorschrift 1) und 2) sind erfindungsgemäß, Herstellvorschrift 3) ist gemäß EP 3 271 426.

Anhand der Ausbeute der hergestellten Systeme konnte der Materialverlust bestimmt werden. Zur visuellen Bestimmung der Oberflächengüte wurden die hergestellten Systeme auf Aluminium appliziert.

Die Ergebnisse sind in Tabelle 14 aufgeführt.

**Tabelle 14**

| Za | Ausbeute [%] | Oberflächengüte | Anti-Fouling Eigenschaft |
|---|---|---|---|
| 1) mit Glasperlen | 67 | sehr glatt | 0 |
| 2) ohne Glasperlen | 90 | rau | 0 |
| 3) mit Zirkonoxidperlen | 65 | sehr glatt | 0 |
| **Zb** | | | |
| 1) mit Glasperlen | 69 | sehr glatt | 0 |
| 2) ohne Glasperlen | 93 | rau | 0 |
| 3) mit Zirkonoxidperlen | 66 | sehr glatt | 0 |

Werden Glasperlen oder Zirkonoxidperlen als Mahlkörper verwendet, kann eine bessere Oberflächengüte erreicht werden. Jedoch kommt es zu massiven Ausbeuteverlusten von fast 20 %. Somit stehen dem Anwender zwei Optionen zur Verfügung. Sollte er sich für eine hohe Ausbeute entscheiden, weil die Oberflächengüte für bestimmte Anwendungen keine Rolle spielt, dann ist das erfindungsgemäße Verfahren ohne Glasperlen zu empfehlen. Sollte die Oberflächengüte wichtig sein, dann ist das erfindungsgemäße Verfahren mit Glasperlen zu empfehlen. Er kann eine etwas höhere Ausbeute im Gegensatz zu einem Verfahren mit Zirkonoxidperlen mit gleichbleibender Oberflächengüte und Anti-Fouling Wirkung erhalten. Die geringe höhere Ausbeute kann dann beispielsweise bei der großtechnischen Herstellung der Systeme eine ökonomisch wichtige Rolle zukommen. Die Verwendung von Glasperlen hat zudem weitere Vorteile, da diese deutlich preiswerter und einfacher in der Anwendung sind. Darüber hinaus kann die Umweltbelastung durch die Reinigung der Zirkonoxidperlen mit großen Mengen Lösungsmitteln vermieden werden.

**Patentansprüche**

1. Lacksystem basierend auf mindestens einem bewuchshemmenden Metall und/oder dessen Oxid und einer pyrogenen Kieselsäure, wobei die pyrogene Kieselsäure eine BET-Oberfläche von 150 bis 400 $m^2$/g, bestimmt nach DIN ISO 99277,

   eine Stampfdichte von 100 bis 300 g/l, bestimmt nach DIN EN ISO 787/11 und eine Verdickung von weniger als 500 mPas bei 25°C, gemessen wie in der Beschreibung offenbart,

   erhältlich nach Vermahlung mit einem spezifischen Energieeintrag von 200 bis 2000 kJ/kg, bevorzugt 500 bis 1800 kJ/kg, ganz besonders bevorzugt 700 bis 1500 kJ/kg, berechnet gemäß

$$\text{Spezifischem Energieeintrag} = (P_D - P_{D,0}) \times t / m,$$

   mit $P_D$ = gesamte eingetragene Leistung,
   $P_{D,0}$ = Leerlaufleistung,
   t = Zeit des Energieeintrages,
   m = Masse der eingesetzten Kieselsäure, **dadurch gekennzeichnet, dass** das Gewichtsprozent der Kieselsäure ≤ dem Gewichtsprozent des Metalls und/oder dessen Oxids bezogen auf das Gesamtgewicht des Lacksystems ist und dass, das Lacksystem mindestens einen wasserbindenden organischen und/oder anorganischen Füllstoff aufweist.

2. Lacksystem nach Anspruch 1, **dadurch gekennzeichnet, dass** das Gewichtsprozent von Kieselsäure zu Metall und/oder dessen Oxid von 1 : 1 bis 1 : 10, bevorzugt 1 : 1 bis 1 : 8, besonders bevorzugt 1 : 1 bis 1 : 5 bezogen auf das Gesamtgewicht des Lacksystems ist.

3. Lacksystem nach einem der vorgenannten Ansprüche, **dadurch gekennzeichnet, dass** es sich bei dem organischen und/oder anorganischen Füllstoff um Zinkoxid, Gips, Bariumsulfat, Schichtsilikate wie Talkum, Kaolin oder Glimmer, Carbonate wie Kreide oder Calcit oder Titandioxid.

4. Lacksystem nach einem der vorgenannten Ansprüche, **dadurch gekennzeichnet, dass** das bewuchshemmende Metall bevorzugt aus der Gruppe bestehend aus Kupfer, Mangan, Silber, Wolfram, Vanadium und Zinn sowie deren Oxide ausgewählt ist.

5. Lacksystem nach einem der vorgenannten Ansprüche, **dadurch gekennzeichnet, dass** der Anteil an bewuchshemmendem Metall und/oder dessen Oxid 0,5 bis 60 Gew.-%, bevorzugt 1 bis 40 Gew.-%, besonders bevorzugt 5 bis 30 Gew.-%, bezogen auf das Gesamtgewicht des Lacksystems ist.

6. Lacksystem nach einem der vorgenannten Ansprüche, **dadurch gekennzeichnet, dass** der Anteil an pyrogener Kieselsäure 0,5 bis 30 Gew.-%, bevorzugt 1 bis 20 Gew.-%, besonders bevorzugt 2 bis 15 Gew.-%, bezogen auf das Gesamtgewicht des Lacksystems ist.

7. Lacksystem nach einem der vorgenannten Ansprüche, **dadurch gekennzeichnet, dass** es sich bei den pyrogenen Kieselsäuren um hydrophile oder hydrophobe Kieselsäuren handelt.

8. Lacksystem nach einem der vorgenannten Ansprüche, **dadurch gekennzeichnet, dass** es filmbildende Harze enthält.

9. Mit dem Lacksystem gemäß der Ansprüche 1 bis 8 beschichtetes Substrat.

10. Substrat gemäß Anspruch 9, **dadurch gekennzeichnet, dass** es eine theoretische Freisetzungsrate von mindestens 10 pg/cm$^2$/Tag bis maximal 30 pg/cm$^2$/Tag, gemessen nach ASTM D 6442 aufweist.

11. Verfahren zur Herstellung eines Lacksystems nach einem der Ansprüche 1 - 9, **dadurch gekennzeichnet, dass** bewuchshemmende Metalle und/oder deren Oxide und pyrogene Kieselsäure mit einer BET-Oberfläche von 150 bis 400 m$^2$/g, bestimmt nach DIN ISO 99277, mit einer Stampfdichte von 100 bis 300 g/l, bestimmt nach DIN EN ISO 787/11 und mit einer Verdickung von weniger als 500 mPas bei 25°C, gemessen wie in der Beschreibung offenbart, in eine Lackmatrix zur Bildung elektrostatischer Wechselwirkungen zwischen den bewuchshemmenden Metalloxid-Partikeln und der pyrogenen Kieselsäure eingerührt werden.

12. Verfahren nach Anspruch 11, **dadurch gekennzeichnet, dass** vor dem Einrühren in die Lackmatrix die pyrogene Kieselsäure mit einem spezifischen Energieeintrag von 200 bis 2000 kJ/kg, bevorzugt 500 bis 1800 kJ/kg, ganz besonders bevorzugt 700 bis 1500 kJ/kg, berechnet gemäß

$$\text{Spezifischer Energieeintrag} = (P_D - P_{D,0}) \times t / m,$$

mit $P_D$ = gesamte eingetragene Leistung,
$P_{D,0}$ = Leerlaufleistung,
$t$ = Zeit des Energieeintrages,
$m$ = Masse der eingesetzten Kieselsäure, gemahlen wird.

13. Verfahren nach Anspruch 11 oder 12, **dadurch gekennzeichnet, dass** das Einrühren der Kieselsäure und Metalle und/oder deren Oxide bei einer Scherrate von 1000 U/min bis 5500 U/min, bevorzugt 3500 - 4000 U/min für 5 - 180 Minuten, bevorzugt 15 - 60 Minuten, besonders bevorzugt 30 - 45 Minuten bis zu einer Temperatur von 60°C mit oder ohne Glasperlen durchgeführt wird.

14. Verwendung des Lacksystems nach einem der Ansprüche 1 bis 9 für die Beschichtung des aquatischen Bereiches eines Sportbootes, eines kommerziellen Schiffes, eines in Wasser eintauchenden Bauwerkes.

15. Verwendung einer pyrogenen Kieselsäure, wobei die pyrogene Kieselsäure eine BET-Oberfläche von 150 bis 400 m$^2$/g, bestimmt nach DIN ISO 99277,
eine Stampfdichte von 100 bis 300 g/l, bestimmt nach DIN EN ISO 787/11 und
eine Verdickung von weniger als 500 mPas bei 25°C, gemessen gemäß der Beschreibung auf Seite 4, Zeile 19 -33 aufweist,

erhältlich nach Vermahlung mit einem spezifischen Energieeintrag von 200 bis 2000 kJ/kg, bevorzugt 500 bis 1800 kJ/kg, ganz besonders bevorzugt 700 bis 1500 kJ/kg, berechnet gemäß

$$\text{Spezifischem Energieeintrag} = (P_D - P_{D,0}) \times t / m,$$

mit $P_D$ = gesamte eingetragene Leistung,

$P_{D,0}$ = Leerlaufleistung, t = Zeit des Energieeintrages,

m = Masse der eingesetzten Kieselsäure für ein Lacksystem enthaltend mindestens eines bewuchshemmenden Metalls und/oder dessen Oxids **dadurch gekennzeichnet, dass** das Gewichtsprozent der Kieselsäure ≤ dem Gewichtsprozent des Metalls und/oder dessen Oxids bezogen auf das Gesamtgewicht des Lacksystems ist.

**Europäisches Patentamt**
**European Patent Office**
**Office européen des brevets**

## EUROPÄISCHER RECHERCHENBERICHT

Nummer der Anmeldung

EP 21 15 9867

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/146484 A1 (EVONIK DEGUSSA GMBH [DE]; DÜRR GEORG [DE] ET AL.) 22. September 2016 (2016-09-22) | 11-15 | INV. C09C1/00 A01N25/26 |
| Y | * das ganze Dokument * ----- | 1-10 | A01N59/16 C09C1/30 |
| Y | EP 2 921 538 A1 (CHUGOKU MARINE PAINTS [JP]) 23. September 2015 (2015-09-23) * Absätze [0098] - [0099]; Anspruch 1; Tabellen 2-1 * ----- | 1 | C09D5/16 A01N59/20 C08K3/08 C08K3/22 C08K3/36 |
| Y | EP 2 990 449 A1 (CHUGOKU MARINE PAINTS [JP]) 2. März 2016 (2016-03-02) * Absatz [0050] * ----- | 1-10 | C09D7/61 |

**RECHERCHIERTE SACHGEBIETE (IPC)**

C09C
C09G
A01N
C09D

Der vorliegende Recherchenbericht wurde für alle Patentansprüche erstellt

| Recherchenort | Abschlußdatum der Recherche | Prüfer |
|---|---|---|
| Den Haag | 7. Juli 2021 | Siebel, Eric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 15 9867

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2021

| Im Recherchenbericht angeführtes Patentdokument | Datum der Veröffentlichung | Mitglied(er) der Patentfamilie | Datum der Veröffentlichung |
|---|---|---|---|
| WO 2016146484 A1 | 22-09-2016 | BR 112017019665 A2 | 15-05-2018 |
| | | CA 2978503 A1 | 22-09-2016 |
| | | CN 107429083 A | 01-12-2017 |
| | | DE 102015204896 A1 | 22-09-2016 |
| | | DK 3271426 T3 | 29-07-2019 |
| | | EP 3271426 A1 | 24-01-2018 |
| | | ES 2732176 T3 | 21-11-2019 |
| | | JP 6869186 B2 | 12-05-2021 |
| | | JP 2018513240 A | 24-05-2018 |
| | | KR 20170128303 A | 22-11-2017 |
| | | RU 2017135506 A | 18-04-2019 |
| | | SG 11201707300S A | 30-10-2017 |
| | | US 2018100071 A1 | 12-04-2018 |
| | | WO 2016146484 A1 | 22-09-2016 |
| EP 2921538 A1 | 23-09-2015 | CN 104781356 A | 15-07-2015 |
| | | EP 2921538 A1 | 23-09-2015 |
| | | JP 6053816 B2 | 27-12-2016 |
| | | JP 2017071791 A | 13-04-2017 |
| | | JP WO2014077205 A1 | 05-01-2017 |
| | | KR 20150082501 A | 15-07-2015 |
| | | KR 20170042824 A | 19-04-2017 |
| | | SG 10201707423P A | 30-10-2017 |
| | | SG 11201503279T A | 28-08-2015 |
| | | US 2015299515 A1 | 22-10-2015 |
| | | WO 2014077205 A1 | 22-05-2014 |
| EP 2990449 A1 | 02-03-2016 | AR 096059 A1 | 02-12-2015 |
| | | BR 112015026577 A2 | 25-07-2017 |
| | | CN 105143368 A | 09-12-2015 |
| | | EP 2990449 A1 | 02-03-2016 |
| | | JP 5989237 B2 | 07-09-2016 |
| | | JP WO2014175246 A1 | 23-02-2017 |
| | | KR 20150138354 A | 09-12-2015 |
| | | SG 11201508319Q A | 27-11-2015 |
| | | US 2017015841 A1 | 19-01-2017 |
| | | WO 2014175246 A1 | 30-10-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7147921 B
- WO 2013036746 A
- WO 2014187769 A
- EP 3271426 A
- WO 2005005516 A
- EP 0779304 A